# EUROPÄISCHE PATENTSCHRIFT

(11) **EP 1 523 781 B1**
(45) Veröffentlichungstag und Bekanntmachung des Hinweises auf die Patenterteilung: **26.10.2005**
(21) Anmeldenummer: 03787623.2
(22) Anmeldetag: 02.07.2003
(51) Int. Cl.: H01M 8/02, H01M 8/04

(54) **BRENNSTOFFZELLE MIT INTERNER GASREGULIERUNG**
INTERNALLY GAS REGULATED FUEL CELL
PILE A COMBUSTIBLE MUNIE D'UNE REGULATION DE GAZ INTERNE

(30) Priorität: 19.07.2002 DE 10232871
(43) Veröffentlichungstag der Anmeldung: 20.04.2005
(73) Patentinhaber: DaimlerChrysler AG, 70567 Stuttgart (DE)
(72) Erfinder: BLANK, Felix, 78464 Konstanz (DE); HELLER, Cosmas, 88045 Friedrichshafen (DE)
(86) Internationale Anmeldenummer: PCT/DE2003/002201
(87) Internationale Veröffentlichungsnummer: WO 2004/017449

(56) Entgegenhaltungen:
- EP-A- 1 109 241
- DE-A- 10 055 253

## Beschreibung

Die Erfindung betrifft Brennstoffzellen, wie sie beispielsweise in modernen Fahrzeugen für Traktionszwecke eingesetzt werden. Typischerweise sind dabei Gruppen von Brennstoffzellen zu sog. Stacks zusammengefaßt.

Zur Vereinfachung und Effizienzsteigerung derartiger Brennstoffzellen-Stacks werden häufig unbefeuchtete oder teilbefeuchtete Brennstoffzellen bei hohen Betriebstemperaturen und niedrigen Drücken eingesetzt. Dabei entfällt der apparative Aufwand für Gas/Gas-Befeuchtungseinrichtungen oder es kann auf die - für die Kondensation notwendige - Kühlerfläche verzichtet werden. Durch die hohen Betriebs- und damit Kühlwassertemperaturen der Brennstoffzelle kann der Fahrzeugkühler reduziert und durch den niedrigen Betriebsdruck die Verdichterleistung gesenkt werden.

Bei den beschriebenen Betriebsbedingungen entsteht zwangsläufig das Problem der (partiellen) Austrocknung des Elektrolyten der Membrane-Elektroden-Einheit (MEA) - besonders am Kathodeneingang - durch das ungesättigt eintretende Gas.

Stand der Technik sind spezielle Anordnungen mehrerer Brennstoffzellen-Stacks, die nacheinander von den Reaktionsstoffen (i.a. Gase) durchströmt werden. Das durch die Zellenreaktion im ersten Stack gebildete Wasser wird so von den Reaktionsstoffen zu den nachgeschalteten Stacks mitgeführt. Eine derartige Anordnung ist beispielsweise beschrieben in der EP1009050 wobei das Kathodengas eines ersten (Niedertemperatur-) Stacks mit einem Gasgemisch aus Kathodengas eines zweiten (Hochtemperatur-) Stacks und zudosierter Frischluft versorgt wird. Dadurch ist eine Anpassung des Feuchtegehalts aber nur am Eingang des zweiten Stacks möglich. Da bei dieser Anordnung keine zusätzlichen Möglichkeiten für eine Gasmischung bestehen, kann sowohl die Feuchte als auch der Sauerstoff- bzw. Wasserstoffpartialdruck nicht lokal - also beispielsweise für einzelne Zellen innerhalb eines Stacks - eingestellt werden. Dies hat zu Folge, daß der Sauerstoff- bzw. Wasserstoffpartialdruck am Kanaleingang deutlich (häufig 1,5 bis 3 mal) größer ist, als am Ausgang. Inhomogene Reaktionsverteilung und die Gefahr lokaler Überhitzung (sog. Hot Spots) sind die Folge. Außerdem besteht entweder am Anoden- bzw. Kathodeneingang die Gefahr des Austrocknens oder es besteht am Ausgang die Gefahr der Kondensation und damit der Behinderung der Eduktzufuhr an die reaktiven Zonen der MEA.

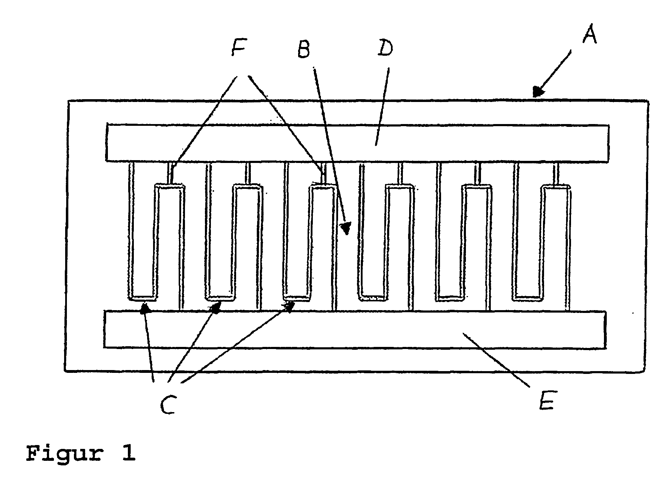

Ein anderer Vorschlag zur Beeinflussung der Feuchtigkeitsverteilung ist Gegenstand der DE 100 55 253 A1. Bei dieser Anordnung (dargestellt in Figur 1) weist die Verteilerplatte (A) einer Brennstoffzelle einen Kanalbereich (B) mit mehreren parallelen Gaskanälen (C) auf. Diese Gaskanäle (C) verlaufen von einem Portbereich (D), welcher der Gaszuführung dient, zu einem Portbereich (E), über den das Gas abgeführt wird. Zwischen dem Portbereich (D) und den Gaskanälen (C) verlaufen Verbindungskanäle (F). Über diese Verbindungskanäle (F) ist eine lokale Zudosierung von frischem, unverbrauchtem Gas aus dem Portbereich (D) in die Gaskanäle (C) möglich. Durch einen verringerten Querschnitt der Verbindungskanäle (F) gegenüber den Gaskanälen (C) wird der Volumenstrom des frischen Gasstroms derart dosiert, dass die vorhandene lokale Feuchtigkeit im Gaskanal (C) ausreicht, ein Austrocknen der MEA zu verhindern. Da die Verbindungskanäle (F) mit einem gemeinsamen Zuleitungsport (D) verbunden sind, betrifft eine Beeinflussung der Gaszusammensetzung stets die gesamte Zelle.

Die vorliegende Erfindung geht aus von dieser Anordnung als nächstliegendem Stand der Technik. Ihr liegt die Aufgabe zugrunde, eine Brennstoffzelle zu entwickeln, bei der eine Beeinflussung der Gaszusammensetzung in verschiedenen Bereichen einer Zelle individuell bewirkt werden kann.

Diese Aufgabe wird bei einer Brennstoffzelle mit den Merkmalen des Oberbegriffs des Anspruchs 1 gelöst durch die kennzeichnenden Merkmale des Anspruchs 1. Weitere Details vorteilhafter Ausführungsformen sind Gegenstand der Unteransprüche.

Die beschriebenen Probleme werden erfindungsgemäß mit Hilfe einer vorteilhaften Strömungsführung über mehrere Felder innerhalb einer Brennstoffzelle gelöst. Am Kathoden- bzw. Anodeneingang wird dabei ein verhältnismäßig geringer und ungesättigter Gasstrom der Zelle zugegeben. Dieser Gasstrom kann im Gegensatz zum Stand der Technik kleiner sein als der auf der gesamten aktiven Zellfläche der Bipolarplatte verbrauchte Gasstrom. Durch die geringe Gasmenge wird der MEA im Eingangsbereich weniger Feuchte entzogen. Außerdem wird der Gasstrom schneller durch die Produktwassererzeugung der Zelle befeuchtet bzw. mit Wasserdampf gesättigt. Um der Zelle nochmals Sauerstoff bzw. Wasserstoff zuzuführen wird nach Durchlaufen des ersten Feldes der Gasverteilerstruktur das teilweise abgereicherte Anoden- bzw. Kathodengas in einen Port außerhalb der aktiven Zellfläche geführt, dort definiert mit Frischgas gemischt und anschließend in ein weiteres Feld der Anode bzw. Kathode weitergeleitet. Die Gasmischung erfolgt vorteilhafterweise getrennt zwischen Anoden- und Kathodengasstrom und kann mehrfach entlang der Gaskanäle einer Bipolarplatte angewendet werden. Dadurch kann der Feuchtegehalt der Kathoden- bzw. Anodengase lokal eingestellt und optimiert werden.

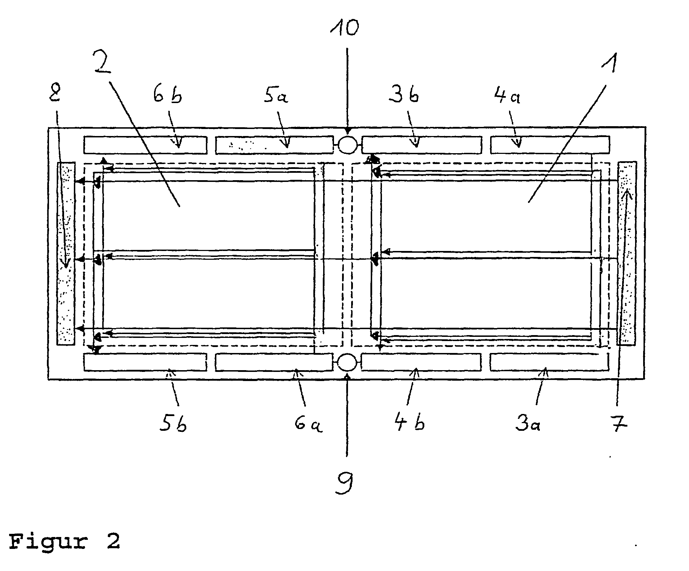

Die Erfindung wird im folgenden anhand eines einfachen Ausführungsbeispiels unter Verwendung der Bezugszeichen der Figur 2 näher beschrieben.

Figur 2 zeigt eine erfindungsgemäße Flowfield-Struktur einer Zelle mit zwei Feldern und zugehöriger Anordnung der Ports für Ein- und Auslaß der Reaktionsstoffe und des Kühlmediums.

Unter Reaktionsstoffen werden im Rahmen der vorliegenden Erfindung alle an der elektrochemischen Reaktion beteiligten Stoffe verstanden, also sowohl Edukte, wie z.B. H₂ und O₂, als auch Produkte, wie z.B. H₂O, sowie Gemische daraus.

Die aktive Zellfläche (Bipolarplatte) ist hier - als einfachste Variante - in nur zwei Felder (1, 2) unterteilt, wobei in jedem Feld mindestens eine anoden- und kathodenseitige Gasverteilerstruktur (nicht dargestellt) vorliegt. Durch einen Eingangsport (4a) tritt das frische Kathodengas in das erste Feld (1) ein, wird dort durch den stattfindenden Brennstoffzellenprozeß teilweise abgereichert und wird in den Ausgangsport (4b) des Feldes 1 geleitet. Entweder wird es dort oder im anschließenden Eingangsport (6a) des folgenden Feldes mit Frischgas über einen regelbaren Einlaßport (9) gemischt. Es ist auch möglich die beiden letztgenannten Ports (4b, 6a) zusammenzulegen oder die Frischgaszufuhr in einem separaten Raum durchzuführen. Das entstandene Gasgemisch aus abgereichertem Gas des vorhergehenden Feldes und dem Frischgas tritt dann in die Kanalstruktur des nachfolgenden Feldes (2) ein, wird dort durch den stattfindenden Brennstoffzellenprozeß teilweise abgereichert und wird in den Ausgangsport (6b) des Feldes (2) geleitet. Entweder verläßt daraufhin das Kathodengas den Stack oder es findet wiederum eine Frischgasanreicherung in oben beschriebener Weise statt für nachgeschaltete Felder, da prinzipiell kathodenseitig mehrere Felder möglich sind (nicht dargestellt).

Die Gasversorgung der Anode kann analog zu der beschriebenen Strömungsführung und Gasmischung der Kathodenseite erfolgen:

Durch einen Eingangsport (3a) tritt das frische Anodengas in das erste Feld (1) ein, wird dort durch den stattfindenden Brennstoffzellenprozeß teilweise abgereichert und wird in den Ausgangsport (3b) des Feldes (1) geleitet. Entweder wird es dort oder im anschließenden Eingangsport (5a) des folgenden Feldes (2) mit Frischgas über einen regelbaren Einlaßport (10) gemischt. Es ist auch möglich die beiden letztgenannten Ports (3b, 5a) zusammenzulegen oder die Frischgaszufuhr in einem separaten Raum durchzuführen. Das entstandene Gasgemisch aus abgereichertem Gas des vorhergehenden Feldes (1) und dem Frischgas tritt dann in die Kanalstruktur des nachfolgenden Feldes (2) ein, wird dort durch den stattfindenden Brennstoffzellenprozeß wiederum teilweise abgereichert und wird in den Ausgangsport (5b) des Feldes (2) geleitet. Entweder verläßt daraufhin das Anodengas den Stack oder es findet wiederum eine Frischgasanreicherung in oben beschriebener Weise für nachgeschaltete Felder statt. Es sind somit auch anodenseitig mehrere Felder denkbar.

Bei Bedarf kann die Anode und/oder Kathode des Felds 2 oder anderer Felder ausschließlich mit unverbrauchtem Gas direkt versorgt werden.

Darüber hinaus können die Gasströme der einzelnen Felder auch dahingehend kombiniert werden, daß die austretenden Kathoden- oder Anodengasströme mehrerer Felder mit oder ohne Frischgasanreicherung vollständig oder teilweise in weitere Felder geleitet werden. Dadurch können beispielsweise Felder auf niedrigerem Temperaturniveau mit ihrem austretenden feuchten Gasstrom Felder versorgen, die auf höherem Temperaturniveau liegen und damit größerer Austrocknungsgefahr ausgesetzt sind.

Bezüglich der Kühlmedienführung sieht Figur 1 lediglich einen Ausgangs- (8) und einen Eingangsport (7) für alle Felder einer Zelle vor. Um die Temperatur der einzelnen Felder genauer zu steuern, können aber auch Felder mit einem extra Ein- und Ausgangsports für das Kühlmedium versorgt werden (nicht dargestellt). Dabei können analog zur Anode und Kathode die ein- und austretenden Kühlmedienströme der einzelnen Felder miteinander kombiniert werden. Es können analog zu Anode und Kathode Kühlmedienströme bestimmter Felder entweder zusammengeführt oder geteilt und anschließend ganz oder teilweise in ein weiteres Feld eingeleitet werden.

Sinnvoll ist beispielsweise der Betrieb zweier Felder mit separaten Kühlmedienports, um dort die Zelle auf niedrigem Temperaturniveau zu halten. An diesen Stellen wäre dann ein unbefeuchteter oder wenig befeuchteter Betrieb der Zelle möglich. In einem dritten Feld würde dann das austretende und schon warme Kühlmedium und der austretende Kathodengasstrom der beiden kälteren Felder verwendet. Dies hat den Vorteil, daß im dritten Feld trotz höhere Zelltemperatur durch das teilweise abgereicherte aber schon befeuchtete Kathodengas der vorgeschalteten Felder die Austrocknungsgefahr verringert wird. Das letztlich aus Feld drei austretende Kühlmedium ist dann deutlich heißer als wenn alle drei Felder mit einem unabhängigen Kühlmedienstrom versorgt werden würden. Durch die höhere Kühlmedientemperatur verringert sich dann die Größe des Fahrzeugkühlers bei gleicher übertragener Wärmeleistung.

Die schematisch dargestellt Kanalstrukturen zwischen den Ein- und Ausgangsports stellen nur eine Möglichkeit der Kanalstrukturgestaltung dar. Grundsätzlich sind serpentinenförmige, parallele, verzweigte oder/und genoppte Strukturen denkbar.

Durch die erfindungsgemäße Aufteilung der Zelle in mehrere Felder kann die Feuchte und der Sauerstoff- bzw. Wasserstoffgehalt der Kathoden- und Anodengase über die gesamte Zellfläche gleichmäßig verteilt werden. Damit kann ein Austrocknen vermindert bzw. beseitigt werden. Zusätzlich ist durch gezielte Gasbeimischung auch eine Beeinflussung der Reaktionsverteilung in der Zelle möglich, so dass eine Entstehung von lokalen Hot Spots weitgehend vermieden werden kann. In einer erweiterten Ausführung der Erfindung sind dazu die verschiedenen Felder jeweils mit Temperatursenoren ausgestattet. Damit kann die jeweilige Gaszusammensetzung und/oder der Kühlmittelfluß in Abhängigkeit von der jeweiligen Feldtemperatur auf die optimalen Betriebswerte eingestellt werden.

## Patentansprüche

1. Brennstoffzelle mit einer Membran-Elektroden-Anordnung (MEA), anoden- und kathodenseitigen Bipolarplatten mit Führungskanälen für Reaktionsstoffe sowie Führungskanalstrukturen für ein Kühlmedium,
**dadurch gekennzeichnet,**
**dass** die Verteilerstruktur der Führungskanäle (Flowfield) für die Reaktionsstoffe der Anode oder/und Kathode in mindestens zwei Felder (1, 2) aufgeteilt ist, wobei jedes Feld (1, 2) Eingangs- (3a,4a; 5a,6a) und Ausgangsports (3b,4b; 5b,6b) für die Reaktionsstoffe aufweist.

2. Brennstoffzelle nach Anspruch 1,
**dadurch gekennzeichnet,**
**dass** mindestens ein Ausgangsport (3b, 4b) eines Feldes (1) mit einem Eingangsport (5a, 6a) eines anderen Feldes (2) verbunden ist.

3. Brennstoffzelle nach Anspruch 2,
**dadurch gekennzeichnet,**
**dass** im Bereich der Verbindung von Ausgangsport (3b, 4b) des einen Feldes (1) und Eingangsport (5a, 6a) des anderen Feldes (2) eine Zuleitung (9, 10) zur Einleitung von Betriebsstoffen, bevorzugt von Reaktionsstoffen, vorhanden ist.

4. Brennstoffzelle nach Anspruch 1, 2 oder 3,
**dadurch gekennzeichnet,**
**dass** mindestens zwei Felder (1, 2) separate Ein- und Ausgangsports für das Kühlmedium aufweisen.

5. Brennstoffzelle nach Anspruch 4,
**dadurch gekennzeichnet,**
**dass** Mittel vorhanden sind, über die der Fluß und/oder die Beschaffenheit des Kühlmediums für mindestens zwei Felder (1, 2) separat einstellbar ist.

6. Brennstoffzelle nach Anspruch 4 oder 5,
**dadurch gekennzeichnet,**
**dass** mindestens ein Kühlmedium-Ausgangsport eines Feldes mit einem Kühlmedium-Eingangsport eines anderen Feldes verbunden ist.

7. Brennstoffzelle nach einem der Ansprüche 1 bis 6,
**dadurch gekennzeichnet,**
**dass** Mittel vorhanden sind, über die der Fluß und/oder die Zusammensetzung der Reaktionstoffe für mindestens zwei Felder (1, 2) separat einstellbar ist.

8. Brennstoffzelle nach einem der Ansprüche 1 bis 7,
**dadurch gekennzeichnet ,**
**dass** wenigstens eines der Felder, bevorzugt jedes der Fel der, einen Temperaturfühler aufweist.

9. Verfahren zum Betreiben einer Brennstoffzelle, die die Merkmale eines der Ansprüche 1 bis 8 aufweist,
**dadurch gekennzeichnet,**
**dass** der aus dem Ausgangsport (4b) der Kathodenstruktur eines oder mehrerer Felder (1) austretende teilverbrauchte Reaktionsstoff mit frischem Reaktionsstoff gemischt und der Kathodenstruktur eines oder mehrerer anderer Felder (2) über entsprechende Eingangsports(6a) zugeführt wird.

10. Verfahren zum Betreiben einer Brennstoffzelle, die die Merkmale eines der Ansprüche 1 bis 8 aufweist,
**dadurch gekennzeichnet,**
**dass** der aus dem Ausgangsport (3b) der Anodenstruktur eines oder mehrerer Felder austretende teilverbrauchte Reaktionsstoff mit frischem Reaktionsstoff gemischt und der Anodenstruktur eines oder mehrerer anderer Felder (2) über entsprechende Eingangsports (5a) zugeführt wird.

11. Verfahren zum Betreiben einer Brennstoffzelle, die die Merkmale eines der Ansprüche 4, 5 oder 6 aufweist,
**dadurch gekennzeichnet,**
**dass** das aus einem oder mehreren Feldern austretende Kühlmedium mit frischem Kühlmedium gemischt und über entsprechende Kühlmedium-Eingangsports einem oder mehreren anderen Feldern zugeführt wird.

12. Verfahren nach Anspruch 11,
**dadurch gekennzeichnet,**
**dass** mindestens zwei Felder (1, 2) mit unterschiedlichen Kühlmedien (z.B. Luft, Wasser) betrieben werden.

13. Verfahren nach Anspruch 11 oder 12
**dadurch gekennzeichnet,**
**dass** für mindestens zwei Felder (1, 2) Kühlmedien mit unterschiedlicher Temperatur und/oder Strömungsgeschwindigkeit verwendet werden.

14. Verfahren nach einem der Ansprüche 9 bis 13,
**dadurch gekennzeichnet,**
**dass** für mindestens zwei Felder (1, 2) Anoden-
und/oder Kathoden-Reaktionsstoffe mit unterschiedlichen Eigenschaften (z.B. Zusammensetzung, Massestrom) verwendet werden.

15. Verfahren nach Anspruch 13 oder 14,
**dadurch gekennzeichnet,**
**dass** die Temperatur jedes Feldes (1, 2) gemessen und zur Steuerung der Brennstoffzelle durch Veränderung von Zu sammensetzung und/oder Fluß der Reaktionsstoffe, bzw. des Kühlmediums verwendet wird.

16. Verfahren zum Betreiben von mindestens zwei Stacks aus Brennstoffzellen, die die Merkmale eines der Ansprüche 1 bis 8 aufweisen,
**dadurch gekennzeichnet,**
**dass** Reaktionsstoffe und/oder Kühlmedium nacheinander über Felder (1, 2) von Zellen verschiedener Stacks geleitet werden.

## Claims

1. Fuel cell having a membrane electrode assembly (MEA), anode-side and cathode-side bipolar plates with guide passages for reactants and guide passage structures for a cooling medium, **characterized in that** the distributor structure of the guide passages (flowfield) for the reactants of the anode and/or cathode is divided into at least two fields (1, 2), each field (1, 2) having entry ports (3a, 4a; 5a, 6a) and exit ports (3b, 4b; 5b, 6b) for the reactants.

2. Fuel cell according to Claim 1, **characterized in that** at least one exit port (3b, 4b) of one field (1) is connected to an entry port (5a, 6a) of another field (2).

3. Fuel cell according to Claim 2, **characterized in that** a feed line (9, 10) for introducing operating substances, preferably reactants, is present in the region of the connection between exit port (3b, 4b) of the one field (1) and entry port (5a, 6a) of the other field (2).

4. Fuel cell according to Claim 1, 2 or 3, **characterized in that** at least two fields (1, 2) have separate entry and exit ports for the cooling medium.

5. Fuel cell according to Claim 4, **characterized in that** there are means which can be used to set the flow rate and/or condition of the cooling medium separately for at least two fields (1, 2).

6. Fuel cell according to Claim 4 or 5, **characterized in that** at least one cooling medium exit port of one field is connected to a cooling medium entry port of another field.

7. Fuel cell according to one of Claims 1 to 6, **characterized in that** there are means which can be used to set the flow rate and/or composition of the reactants separately for at least two fields (1, 2).

8. Fuel cell according to one of Claims 1 to 7, **characterized in that** at least one of the fields, preferably each of the fields, has a temperature sensor.

9. Method for operating a fuel cell which has the features of one of Claims 1 to 8, **characterized in that** the partially consumed reactant which emerges from the exit port (4b) of the cathode structure of one or more fields (1) is mixed with fresh reactant and fed to the cathode structure of one or more other fields (2) via corresponding entry ports (6a).

10. Method for operating a fuel cell which has the features of one of Claims 1 to 8, **characterized in that** the partially consumed reactant which emerges from the exit port (3b) of the anode structure of one or more fields is mixed with fresh reactant and fed to the anode structure of one or more other fields (2) via corresponding entry ports (5a).

11. Method for operating a fuel cell which has the features of one of Claims 4, 5 and 6, **characterized in that** the cooling medium which emerges from one or more fields is mixed with fresh cooling medium and fed to one or more other fields via corresponding cooling medium entry ports.

12. Method according to Claim 11, **characterized in that** at least two fields (1, 2) are operated with different cooling media (e.g. air, water).

13. Method according to Claim 11 or 12, **characterized in that** cooling media with different temperatures and/or flow velocities are used for at least two fields (1, 2).

14. Method according to one of Claims 9 to 13, **characterized in that** anode and/or cathode reactants with different properties (e.g. composition, mass flow) are used for at least two fields (1, 2).

15. Method according to Claim 13 or 14, **characterized in that** the temperature of each field (1, 2) is measured and is used to control the fuel cell by changing composition and/or flow rate of the reactants and/or of the cooling medium.

16. Method for operating at least two stacks of fuel cells which have the features of one of Claims 1 to 8, **characterized in that** reactants and/or cooling medium are successively passed via fields (1, 2) of cells belonging to different stacks.

## Revendications

1. Cellule à combustible avec un assemblage membrane-électrodes (AME), des plaques bipolaires côté anode et côté cathode avec des canaux de guidage pour des substances réactives ainsi que des structures de canaux de guidage pour un réfrigérant, **caractérisée en ce que** la structure distributrice des canaux de guidage (« flow field ») pour les substances réactives de l'anode ou/et de la cathode est subdivisée en au moins deux champs (1, 2), sachant que chaque champ (1, 2) présente des lumières d'entrée (3a, 4a ; 5a, 6a) et de sortie (3b, 4b ; 5b, 6b) pour les substances réactives.

2. Cellule à combustible selon la revendication 1, **caractérisée en ce qu'**au moins une lumière de sortie (3b, 4b) d'un champ (1) est reliée à une lumière d'entrée (5a, 6a) d'un autre champ (2).

3. Cellule à combustible selon la revendication 2, **caractérisée en ce qu'**une conduite d'alimentation (9, 10) pour l'introduction de substances d'exploitation, de préférence de substances réactives, est présente dans la région de la liaison entre la lumière de sortie (3b, 4b) d'un des champs (1) et la lumière d'entrée (5a, 6a) de l'autre champ (2).

4. Cellule à combustible selon la revendication 1, 2 ou 3, **caractérisée en ce qu'**au moins deux champs (1, 2) présentent des lumières séparées d'entrée et de sortie pour le réfrigérant.

5. Cellule à combustible selon la revendication 4, **caractérisée en ce que** des moyens sont présents qui permettent de régler séparément le flux et/ou la nature du réfrigérant pour au moins deux champs (1, 2).

6. Cellule à combustible selon la revendication 4 ou 5, **caractérisée en ce qu'**au moins une lumière de sortie de réfrigérant d'un champ est reliée à une lumière d'entrée de réfrigérant d'un autre champ.

7. Cellule à combustible selon l'une quelconque des revendications 1 à 6, **caractérisée en ce que** des moyens sont présents qui permettent de régler séparément le flux et/ou la composition des substances réactives pour au moins deux champs (1, 2).

8. Cellule à combustible selon l'une quelconque des revendications 1 à 7, **caractérisée en ce qu'**au moins un des champs, de préférence chacun des champs, présente un capteur de température.

9. Procédé d'exploitation d'une cellule à combustible qui présente les caractéristiques d'une des revendications 1 à 8, **caractérisé en ce que** la substance réactive partiellement consommée sortant par la lumière de sortie (4b) de la structure de cathode d'un ou plusieurs champs (1) est mélangée à de la substance réactive neuve, et est apportée à la structure de cathode d'un ou plusieurs autres champs (2) par l'intermédiaire de lumières d'entrée correspondantes (6a).

10. Procédé d'exploitation d'une cellule à combustible qui présente les caractéristiques d'une des revendications 1 à 8, **caractérisé en ce que** la substance réactive partiellement consommée sortant par la lumière de sortie (3b) de la structure d'anode d'un ou plusieurs champs est mélangée à de la substance réactive neuve, et est apportée à la structure d'anode d'un ou plusieurs autres champs (2) par l'intermédiaire de lumières d'entrée correspondantes (5a).

11. Procédé d'exploitation d'une cellule à combustible qui présente les caractéristiques d'une des revendications 4, 5 ou 6, **caractérisé en ce que** le réfrigérant sortant d'un ou plusieurs champs est mélangé à du réfrigérant neuf, et est apporté à un ou plusieurs autres champs par l'intermédiaire de lumières correspondantes d'entrée de réfrigérant.

12. Procédé selon la revendication 11, **caractérisé en ce qu'**au moins deux champs (1, 2) sont exploités avec des réfrigérants différents (par exemple air, eau).

13. Procédé selon la revendication 11 ou 12, **caractérisé en ce qu'**on utilise pour au moins deux champs (1, 2) des réfrigérants ayant des températures et/ou des vitesses d'écoulement différentes.

14. Procédé selon l'une quelconque des revendications 9 à 13, **caractérisé en ce qu'**on utilise pour au moins deux champs (1, 2) des substances réactives d'anode et/ou de cathode ayant des caractéristiques différentes (par exemple composition, débit massique).

15. Procédé selon la revendication 13 ou 14, **caractérisé en ce qu'**on mesure la température de chaque champ (1, 2) et on l'utilise pour la commande de la cellule à combustible par modification de la composition et/ou du flux des substances réactives ou respectivement du réfrigérant.

16. Procédé d'exploitation d'au moins deux empilements de cellules à combustible qui présentent les caractéristiques d'une des revendications 1 à 8, **caractérisé en ce qu'**on fait passer successivement des substances réactives et/ou du réfrigérant par des champs (1, 2) de cellules d'empilements différents.
